# FASCICULE DE BREVET EUROPEEN

(11) **EP 2 908 932 B1**
(45) Date de publication et mention de la délivrance du brevet: **03.08.2016**
(21) Numéro de dépôt: 13782753.1
(22) Date de dépôt: 24.09.2013
(51) Int. Cl.: B01J 8/00, B01J 8/06

(54) **SYSTÈME DE CHARGEMENT DENSE DU CATALYSEUR DANS DES TUBES A BAIONNETTE POUR RÉACTEUR ÉCHANGEUR DE VAPOREFORMAGE FAISANT APPEL A DES ELEMENTS HELICOIDAUX AMOVIBLES**
SYSTEM ZUR DICHTEN KATALYSATORBELADUNG IN BAJONETTRÖHREN FÜR EINER DAMPFREFORMIERUNGSREAKTOR-AUSTAUSCHER MIT ENTFERNBAREN SCHRAUBENFÖRMIGEN ELEMENTEN
SYSTEM FOR DENSE CATALYST LOADING IN BAYONET TUBES FOR A STEAM REFORMING REACTOR-EXCHANGER, USING REMOVABLE HELICAL ELEMENTS

(30) Priorité: 17.10.2012 FR 1202770
(43) Date de publication de la demande: 26.08.2015
(73) Titulaire: IFP Énergies nouvelles, 92852 Rueil-Malmaison Cedex (FR)
(72) Inventeur: SANZ, Elena, F-69005 Lyon (FR); BEAUMONT, Robert, F-69140 Rillieux La Pape (FR); BERGEOT, Ghislain, F-69360 Solaize (FR); BOYER, Christophe, F-69390 Charly (FR)
(86) Numéro de dépôt international: PCT/FR2013/052240
(87) Numéro de publication internationale: WO 2014/060669

(56) Documents cités:
- FR-A1- 2 874 212
- FR-A1- 2 950 822
- US-A1- 2009 257 849

## Description

### DOMAINE DE L'INVENTION

La présente invention se situe dans le domaine du chargement des tubes catalytiques utilisés dans des réacteurs tubulaires mettant en oeuvre des réactions fortement endothermiques ou fortement exothermiques. La présente invention est donc particulièrement adaptée au réacteur de vaporeformage de gaz naturel ou de diverses coupes hydrocarbonées en vue de la production du mélange CO+H₂ appelé gaz de synthèse.

On peut distinguer deux grandes familles de réacteurs de vaporeformage.

Les réacteurs dans lesquels la chaleur est apportée par un ensemble de brûleurs situés à ) l'intérieur du réacteur, et ceux dans lesquels la chaleur est apportée par un fluide caloporteur, généralement des fumées de combustion, ladite combustion ayant lieu à l'extérieur du réacteur de vaporeformage lui même.

Certains réacteurs de ce dernier type qu'on appelle dans la suite réacteur échangeur, font appel à des tubes simples. D'autres font appel à des tubes concentriques doubles également appelés tubes à baïonnette. Un tube à baïonnette peut se définir comme un tube intérieur entouré d'un tube extérieur coaxial au tube interne, l'espace annulaire compris entre le tube intérieur et le tube extérieur étant généralement rempli de catalyseur. Dans la suite du texte on parlera d'espace annulaire ou de zone catalytique pour désigner ledit espace annulaire défini par les tubes à baïonnette.

) Le gaz naturel, ou plus généralement la charge hydrocarbonée, est généralement introduit(e) par la zone annulaire selon un écoulement de haut en bas, et les effluents réactionnels sont collectés dans la partie centrale du tube interne selon un écoulement de bas en haut. Une introduction de la charge par le tube interne et une évacuation des effluents réactionnels par la zone annulaire (4) est également possible. La présente invention n'est pas liée au sens d'écoulement des fluides à l'intérieur des tubes baïonnette.

La réaction de vaporeformage du gaz naturel pour la production d'hydrogène, est très endothermique et a donc généralement lieu dans des fours ou des réacteurs-échangeurs au sens précédemment défini.

La réaction a lieu a des températures très élevées, typiquement 900°C et sous pression, ) typiquement de 20 à 30 bars. Dans ces conditions, seule une mise en oeuvre de la réaction à l'intérieur de tubes peut être envisagée dans des conditions économiquement viables en raison de la tenue mécanique des matériaux.

Les réacteurs échangeurs catalytiques sont donc constitués d'une multitude de tubes, typiquement de l'ordre de 200 à 350 tubes pour des unités produisant 100 000 Nm³/h d'hydrogène, cet ensemble de tubes étant enfermé dans une calandre qui reçoit le fluide chaud permettant d'apporter les calories nécessaires à la réaction de vaporeformage.

Ce fluide chaud ou fluide caloporteur est généralement constitué par les fumées d'une combustion ayant lieu à l'extérieur du réacteur échangeur.

Le catalyseur doit donc être installé dans tous les tubes de vaporeformage de façon régulière d'un tube à l'autre, afin d'avoir une perte de charge identique d'un tube à l'autre.

Cette condition est très importante pour garantir une bonne répartition des réactifs sur l'ensemble des tubes catalytiques, et éviter qu'un tube soit par exemple moins alimenté, ce qui pourrait conduire à une surchauffe importante du matériau constituant le tube, cette surchauffe réduisant d'autant la durée de vie du tube.

De même, il est important qu'aucun espace vide, c'est à dire sans catalyseur ou appauvri en catalyseur, ne subsiste dans un tube, car à nouveau le tube pourrait surchauffer localement, faute de réaction catalytique à l'intérieur. De plus, toute hétérogénéité dans la répartition du catalyseur dans la zone réactionnelle peut se traduire par un écoulement déséquilibré du ou des fluides réactionnels.

Le dispositif selon la présente invention vise donc un chargement à la fois dense et homogène entre chacun des tubes baïonnette faisant partie du réacteur échangeur.

### EXAMEN DE L'ART ANTERIEUR

Dans un four de reformage classique, le chargement traditionnel des tubes, qui ont un diamètre intérieur typique de 10 cm, se fait à l'aide des sachets remplis de catalyseur qui sont ouverts sur la surface du lit. Ce mode de chargement est connu de l'homme du métier sous l'appellation de chargement "à la chaussette" et est connu pour ne pas générer une importante densité de chargement.

Les tubes sont ensuite vibrés manuellement à coup de marteau ou par un système de vibration mécanique, pour favoriser la mise en place des grains de catalyseur, minimiser les espaces vides et ainsi augmenter la densité de chargement. Cependant, une vibration excessive peut conduire à la rupture des grains de catalyseur, et à une augmentation importante de la perte de charge.

Il est néanmoins difficile avec cette méthode de faire un chargement de bonne qualité, et il est généralement nécessaire de reproduire plusieurs fois l'opération de vibration pour parvenir à des pertes de charge voisines d'un tube à l'autre.

D'autres procédures et équipements améliorés ont été proposés sous le terme de technologie Unidense™ initialement développée par Norsk Hydro ou encore sous le terme de technologie Spiraload™ développée par Haldor Topsøe. Ces technologies s'appliquent à des tubes simples et non à des tubes à baïonnette.

Le brevet FR 2950822 de la demanderesse décrit une solution pour le chargement des tubes à baïonnette avec 3 tubes de chargement, avec freins mécaniques ou freinage pneumatique. Cette méthode de chargement permet un chargement dense et uniforme des tubes baïonnette. S'agissant d'une méthode "grain par grain", elle s'avère trop lente et peu adaptée pour une mise en oeuvre à l'échelle d'un réacteur industriel comportant plusieurs centaines de tubes.

De manière générale on peut dire que de nombreux documents existent dans le domaine du chargement de catalyseur dans les tubes de vaporeformage. La plupart d'entre eux font appel à des moyens de ralentissement souples ou à des obstacles rigides en forme de plan incliné. Mais aucun des documents retrouvés ne concerne une application aux tubes à baïonnette avec chargement d'une zone annulaire et évitement du tube central.

Le dispositif objet de la présente invention peut donc se définir comme un dispositif de chargement dense de catalyseur dans la zone annulaire de tube baïonnette équipant un réacteur échangeur de vaporeformage, le dispositif permettant un chargement homogène en densité dans chacun des tubes du réacteur échangeur en respectant une contrainte de temps compatible avec les impératifs d'un démarrage industriel.

De plus, dans un certain nombre de cas, le dispositif selon l'invention doit pouvoir s'adapter à des variations de diamètre intérieur du tube externe, imposées par les contraintes mécaniques et thermiques qui évoluent le long du tube, donc à un changement de dimensions de la zone annulaire. Aucun dispositif de l'art antérieur ne prend en compte cette contrainte supplémentaire.

### DESCRIPTION SOMMAIRE DES FIGURES

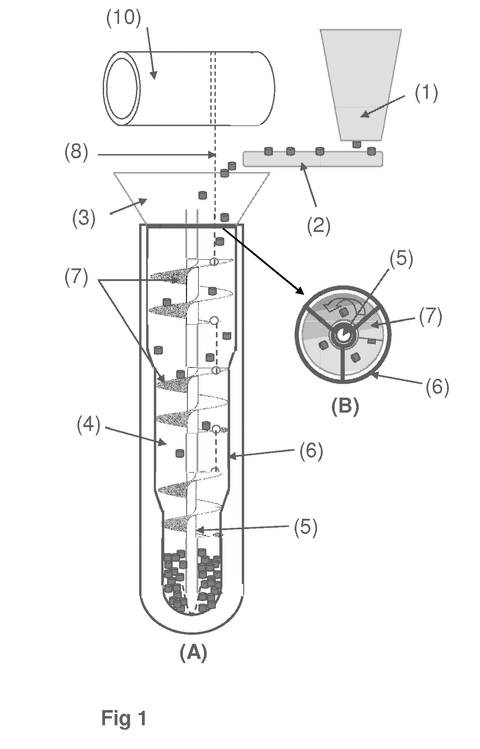

La figure 1 représente le dispositif selon l'invention dans le cas où la zone annulaire de chaque tube baïonnette est divisée en 3 secteurs de chargement de sections identiques formées par le système de maintien du tube central en partie supérieur du tube catalytique.

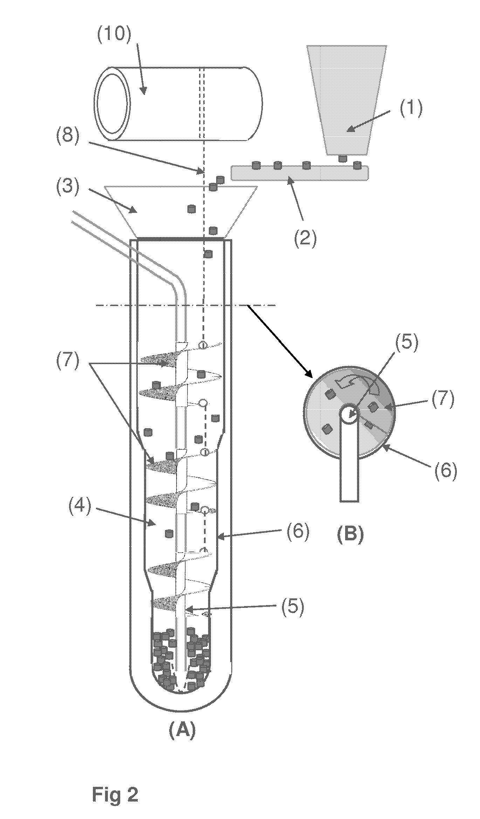

La figure 2 représente le dispositif selon l'invention dans le cas où la zone annulaire est traversée dans sa partie supérieure par le tube interne (5).

### DESCRIPTION SOMMAIRE DE L'INVENTION

La présente invention peut se définir comme un dispositif de remplissage dense du catalyseur spécialement adapté à un réacteur échangeur de vaporeformage consistant en une pluralité de tubes à baïonnette enfermés dans une calandre, chaque tube à baïonnette comportant une zone annulaire au moins partiellement remplie de catalyseur. Ledit catalyseur est constitué de particules occupant au moins en partie l'espace annulaire (4) compris entre un tube interne (5) et un tube externe (6), l'ensemble de ces deux tubes constituant le tube baïonnette, la largeur dudit espace annulaire étant comprise entre 30 mm et 80 mm, et sa hauteur étant comprise entre 10 et 20 mètres.

Les particules de catalyseur ont généralement la forme de cylindres de hauteur approximativement 10 mm à 20 mm, et de diamètre approximativement 5 mm à 20 mm.

Le dispositif selon la présente invention consiste dans sa version de base en :
- un ensemble d'éléments hélicoïdaux "sans âme" reliés entre eux de façon souple par des fils verticaux ou des chaînes s'étendant entre le bord externe et le bord interne de deux éléments hélicoïdaux consécutifs.

Un élément hélicoïdal est défini par son angle d'inclinaison par rapport à la verticale compris entre 30° et 60°, et préférentiellement compris entre 30° et 50°, sa hauteur comprise entre 1 pas et 1,5 pas, préférentiellement comprise entre 1 pas et 1,3 pas, et son diamètre externe qui varie en fonction du diamètre interne du tube externe (6) de telle façon que le dispositif étant entièrement déployé, chaque élément hélicoïdal occupe toute la section annulaire (4). La distance verticale séparant deux éléments hélicoïdaux consécutifs est comprise entre 50 cm et 150 cm.

Chaque élément hélicoïdal est dit "sans âme" au sens où aucun tube rigide n'occupe l'espace interne de chaque élément hélicoïdal.

La notion de pas d'une hélice est à prendre dans sa définition habituelle de distance verticale correspondant à une révolution de l'hélice.

Dans la version de base, l'espace annulaire (4) de chaque tube baïonnette forme un espace continu et présente seulement dans sa partie supérieure l'obstacle constitué par le tube interne (5) traversant le tube externe (6). Cet obstacle ne pose pas de problème pour le déploiement du dispositif selon l'invention. Il suffit de le contourner en engageant correctement les différents éléments hélicoïdaux lors du déploiement du dispositif.

Dans la version où le tube interne (5) est maintenu centré par un centreur, cet obstacle est également facilement contourné par le dispositif selon la présente invention.

Dans le cas où le diamètre interne du tube externe (6) présente des variations définissant des portions de tube externe (6) de diamètre décroissant de haut en bas du tube baïonnette, le système d'éléments hélicoïdaux (7) s'adapte à cette variation de section par l'utilisation en périphérie des éléments hélicoïdaux de plus petit diamètre, de bords souples, par exemple en caoutchouc, fixés au bord externe de l'élément hélicoïdal de petit diamètre.

Lors de la mise en place du dispositif, les bords périphériques souples sont contraints à la paroi du tube externe (6), puis au fur et à mesure de la remontée du dispositif, les bords souples s'étalent de manière à rester au contact de la paroi interne du tube externe (6), même sur les tronçons supérieurs de plus grand diamètre.

Une masse de lest peut alors être ajoutée en bas de la chaîne pour forcer le système à descendre dans la partie de plus petit diamètre.

La présente invention concerne également une méthode de chargement du catalyseur faisant appel au dispositif précédemment décrit, méthode qui peut se décomposer dans la série d'étapes suivantes :
- le système de chargement est initialement enroulé dans l'enrouleur externe (10), la trémie (1) étant remplie de solide,
- le système de chargement est ensuite introduit progressivement dans la zone annulaire (4) par sa partie supérieure jusqu'à ce que le premier élément hélicoïdal (7) atteigne une distance par rapport au fond du tube comprise entre 50 cm et 100 cm,
- le tapis roulant ou le couloir vibrant (2) est mis en route de manière à fournir un débit de solide compris entre 250 kg/h et 500 kg/h, les particules solide étant introduites dans la zone annulaire (4) par l'intermédiaire de l'entonnoir (3),
- au fur et à mesure que le tube se remplit, le système de chargement est remonté dans la zone annulaire (4) à l'aide de l'enrouleur externe (10), de manière à respecter une distance constante entre le premier élément hélicoïdal (7) et la surface du lit qui se constitue progressivement, ladite distance étant comprise entre 50 cm et 100 cm,
- le système est enroulé avec une vitesse équivalente à la vitesse de chargement du tube comprise entre 0,2 m/min et 0,4 m/min,
- une fois le tube chargé et le système de chargement enroulé, le système est déplacé pour le chargement du tube suivant.

### DESCRIPTION DETAILLÉE DE L'INVENTION

La présente invention peut se définir comme un dispositif permettant le chargement dense de catalyseur dans l'espace annulaire (4) de tubes à baïonnette, chaque tube ayant une hauteur comprise entre 10 et 20 m, un diamètre externe compris entre 250 mm et 150 mm, et un diamètre externe du tube interne (5) compris entre 10 et 40 mm.

L'espace annulaire contenant le catalyseur a donc une largeur caractéristique d'environ 50 mm. Dans la pratique, selon les cas, la largeur caractéristique de l'espace annulaire (4) pourra varier entre 80 mm et 30 mm.

De plus, dans certains cas le tube externe (6) a un diamètre décroissant de haut en bas par tronçons, ce qui signifie que la largeur caractéristique de l'espace annulaire (4) diminue également en allant de haut en bas. Le dispositif selon l'invention s'adapte à ces variations de largeur caractéristique et conserve ses performances sur l'ensemble des tronçons.

Les grains de catalyseur ont généralement la forme de cylindres d'environ 10 mm à 20 mm de hauteur et 0,5 cm à 2 cm de diamètre.

Un des problèmes posés par leur chargement dans des tubes de plus de 15 mètres de longueur est le risque de casse de ces grains si on les faisait simplement tomber en chute libre sans aucune précaution, ce qui est une des solutions de l'art antérieur pour réaliser un chargement dense.

D'autres problèmes sont liés à la géométrie même de l'espace catalytique annulaire, ce qui interdit le passage des systèmes de chargement classiques.

Dans un cas fréquent dans le contexte de la présente invention, il faut tenir compte du tube interne (5) qui traverse le tube externe (6) dans la partie supérieure de la zone annulaire (4) pour permettre une sortie totalement dégagée des effluents réactionnels.

Les éléments hélicoïdaux (7) permettent de contourner naturellement cet obstacle lors de la mise en place du dispositif, simplement en engageant l'élément hélicoïdal au dessous de l'obstacle et en faisant tourner le dit élément jusqu'à ce qu'il soit passé entièrement au dessous de l'obstacle.

Comme indiqué dans l'art antérieur, le risque de formation de voûte est accentué lorsque le ratio entre le diamètre du tube et la dimension principale des particules est inférieur à 8, ce qui est souvent le cas dans le contexte de la présente invention, puisque la largeur typique de l'espace annulaire (50 mm) équivaut à environ 4 fois le diamètre caractéristique des particules de catalyseur.

Le dispositif selon la présente invention réduit considérablement le risque de formation de voûtes puisque les particules solides vont s'écouler progressivement au contact des éléments hélicoïdaux et rencontrer finalement une hauteur de chute par rapport au lit en formation d'au plus 1 m.

Enfin, le chargement se faisant tube par tube, il doit être suffisamment rapide pour une utilisation industrielle, car un réacteur de vaporeformage visant une production d'environ 100 000 Nm³/h d'H₂ compte généralement de 200 à 350 tubes baïonnette.

L'ensemble de ces contraintes est satisfait par le dispositif de remplissage dense selon la présente invention qu'on peut définir de la manière suivante:
La présente invention décrit un dispositif de remplissage dense du catalyseur dans un réacteur de vaporeformage consistant en une pluralité de tubes baïonnettes enfermés dans une calandre, le catalyseur étant constitué de grains solides occupant au moins en partie l'espace annulaire compris entre un tube interne et un tube externe, l'ensemble de ces deux tubes constituant un tube baïonnette. Le réacteur échangeur de vaporeformage auquel s'adresse la présente invention est constitué d'environ 300 tubes à baïonnette identiques d'une hauteur comprise entre 12 et 20 mètres, l'ensemble de ces tubes baïonnettes étant enfermé dans une calandre qui peut atteindre 10 mètres de diamètre.

La largeur de l'espace annulaire compris entre le tube interne et le tube externe d'un tube baïonnette est comprise entre 30 mm et 80 mm, et sa hauteur comprise entre 12 et 20 mètres. Les particules de catalyseur ont généralement la forme de cylindres de hauteur approximativement 5 mm à 20 mm, et de diamètre approximativement 10 mm à 20 mm. L'espace annulaire ainsi défini peut être unique ou divisé en plusieurs secteurs sensiblement identiques par un système dit "centreur" qui permet le centrage initial du tube interne (5) à l'intérieur du tube externe (6). Un secteur se définit donc comme une portion d'espace annulaire qui correspond à une fraction bien définie de la section annulaire et s'étend sur toute la hauteur dudit espace annulaire.

Le dispositif de remplissage selon l'invention consiste en:
- un ensemble d'éléments hélicoïdaux (7) régulièrement répartis verticalement le long de l'espace annulaire (4), chaque élément hélicoïdal (7) ayant une longueur comprise entre 1 et 1,5 pas d'hélice, et préférentiellement compris entre 1 et 1,3 pas d'hélice, et les éléments (7) étant séparés d'une distance verticale comprise entre 50 cm et 150 cm,
- lesdits éléments hélicoïdaux (7) étant reliés entre eux par une chaîne (8) qui s'enroule autour d'un enrouleur (10) situé à l'extérieur du tube à remplir, et les particules de catalyseur étant contenues dans:
- une trémie centrale (1) permettant de délivrer les particules sur un tapis roulant (2) alimentant l'espace annulaire (4), par l'intermédiaire:
- d'un entonnoir (3), par lequel s'écoulent les particules à l'intérieur de l'espace annulaire (4).

Chaque élément hélicoïdal (7) a la forme d'un plan incliné vers le bas d'un angle alpha par rapport à la verticale compris entre 30° et 60°, et préférentiellement compris entre 30° et 50°. Dans une variante du dispositif selon la présente invention, on fait alterner les éléments hélicoïdaux qui peuvent être de type "droite" et "gauche" selon le sens de rotation du plan incliné.

Lorsque le diamètre de la paroi de l'espace annulaire (4) varie, en raison de portions de tube externe (6) de diamètre interne décroissant de haut en bas, le système d'éléments hélicoïdaux (7) est muni a ses extrémités les plus proches de la paroi de l'espace annulaire (4) de lèvres en caoutchouc qui permettent d'ajuster la largeur du plan incliné de manière à obtenir un contact avec la paroi interne de l'espace annulaire (4).

Pour faciliter la descente du dispositif à l'intérieur de la zone annulaire, il est possible d'équiper le premier élément hélicoïdal de poids qui permettent de vaincre le frottement des lèvres en caoutchouc à la paroi du tube externe (6). Le premier élément hélicoïdal (7) est celui qui est toujours placé le plus près de la surface du lit catalytique en formation.

Concernant la méthode de chargement faisant appel au dispositif tel que décrit précédemment, elle peut être décrite par les étapes suivantes:
- le système de chargement est initialement enroulé dans l'enrouleur externe (10), la trémie (1) étant remplie de solide,
- le système de chargement est ensuite introduit progressivement dans la zone annulaire (4) par sa partie supérieure jusqu'à ce que le premier élément hélicoïdal (7) atteigne une distance par rapport au fond du tube comprise entre 50 cm et 100 cm.
- le tapis roulant (2) est mis en route de manière à fournir un débit de solide compris entre 250 kg/h et 500 kg/h.
- au fur et à mesure que le tube est rempli, le système de chargement est remonté de la zone annulaire (4) à l'aide de l'enrouleur externe (10), de manière à respecter une distance constante entre le dernier déflecteur et la surface du lit qui se constitue progressivement. Cette distance est comprise entre 50 cm et 100 cm. Le système est donc enroulé avec une vitesse équivalente à la vitesse de chargement du tube comprise entre 0,2 mètre / min et 0,4 mètre/min.
- pendant le chargement, la trémie (1) peut être remplie à nouveau si son volume est plus faible que celui du tube. Cette opération peut se réaliser avec ou sans arrêt du chargement.
- une fois le tube chargé et le système de chargement enroulé, l'ensemble est déplacé pour le chargement du tube suivant.
- des opérations de vérification du chargement, faisant appel à des mesures de perte de charge entre deux points du tube baïonnette accompagnent l'opération de chargement mais ne font pas l'objet d'une description dans ce texte, étant considérée comme bien connues de l'homme du métier.

### EXEMPLE SELON L'INVENTION

Des essais de chargement ont été réalisés avec le dispositif selon l'invention constitué de deux éléments hélicoïdaux de même sens de rotation sur une colonne expérimentale de 2 m de hauteur, constituée d'un tube interne de diamètre externe 42 mm et d'un tube externe de diamètre interne 128,1 mm.

Les particules solides à charger ont la forme de petits cylindres de hauteur 1,5 cm et de diamètre 0,8 cm.

Deux éléments hélicoïdaux de hauteur 200 mm et avec un angle d'inclinaison par rapport à la verticale de 50° sont introduits dans la colonne, à une distance de 60 cm l'un de l'autre.

La distance entre le premier élément hélicoïdal et la surface du lit en formation est maintenue égale à 50 cm pendant le chargement. Le dispositif est donc relevé en continu à une vitesse de 0,2 mètre/min.

Une fois le lit chargé, la mesure de ΔP est faite avec un débit d'air de 116 Nm³/h.

Après déchargement, les particules cassées sont isolées. Le taux de casse observé est très faible, de l'ordre de 1%.

Les résultats du chargement sont montrés dans le tableau 1 ci-dessous.

Le chargement obtenu avec le dispositif selon l'invention est très satisfaisant, avec une excellente reproductibilité en termes de perte de charge (écarts à la moyenne de ± 1%).

Le temps de chargement est au maximum 5 minutes/mètre, ce qui correspond à un temps d'environ 1 heure pour un tube de 12 m (pour un débit de solide d'environ 200 kg/h).

La densité de chargement est de 959 kg/h, reproductible lors de tous les chargements effectués.

**Tableau 1 : résultats des chargements avec le système à hélices sur une colonne de 1 m de hauteur. Débit d'air pour la mesure de perte de charge = 116 Nm³/h.**

| **Temps de chargement (min)** | **Temps de déchargement (min)** | **Vitesse couloir vibrant** | **Hauteur de solide (cm)** | **Densité de chargement (kg/m³)** | **Perte de charge (mm H₂O)** | **Écart à la moyenne** |
|---|---|---|---|---|---|---|
| 4'40" | 7'20" | 4 | 102 | 959 | 208 | -0,97% |
| 4'30" | 7'00" | 4 | 102 | 959 | 206 | 0,00% |
| 5'00" | 9'19" | 4 | 102 | 959 | 204 | 0,97% |
| 4'50" | 7'55" | 4 | 102 | 959 | 206 | 0,00% |
| 4'20" | 8'10" | 4 | 102 | 959 | 206 | 0,00% |

## Revendications

1. Dispositif de remplissage dense du catalyseur dans un réacteur échangeur de vaporeformage consistant en une pluralité de tubes baïonnettes enfermés dans une calandre, le catalyseur étant constitué de particules occupant au moins en partie l'espace annulaire (4) compris entre un tube interne (5) et un tube externe (6), l'ensemble de ces deux tubes constituant un tube baïonnette, la largeur dudit espace annulaire étant comprise entre 30 mm et 80 mm, et sa hauteur comprise entre 10 et 20 mètres, les particules de catalyseur ayant la forme de cylindres de hauteur approximativement 10 mm à 20 mm et de diamètre approximativement 10 mm à 20 mm, le dispositif consistant en:
- un ensemble d'éléments hélicoïdaux sans âme (7), régulièrement répartis verticalement le long de l'espace annulaire (4), de longueur comprise entre 1 et 1,5 pas d'hélice, préférentiellement comprise entre 1 et 1,3 pas d'hélice, lesdits éléments étant séparés par une distance verticale comprise entre 50 cm et 150 cm,
- lesdits éléments hélicoïdaux (7) étant reliés entre eux par une chaîne (8) ou des fils verticaux qui s'enroule(nt) autour d'un enrouleur (10) situé à l'extérieur du tube à remplir, chaque élément hélicoïdal (7) ayant la forme d'un plan incliné vers le bas d'un angle alpha par rapport à la verticale compris entre 30° et 50°, et son diamètre externe variant en fonction du diamètre interne du tube externe (6) de telle façon que le dispositif étant entièrement déployé, chaque élément hélicoïdal (7) occupe toute la section annulaire (4),
et les particules de catalyseur étant contenues dans:
- une trémie centrale (1) permettant de délivrer les particules sur un tapis roulant (2) alimentant l'espace annulaire (4), par l'intermédiaire:
- d'un entonnoir (3), par lequel s'écoulent les particules à l'intérieur de l'espace annulaire (4).

2. Dispositif de remplissage selon la revendication 1, dans lequel chaque élément hélicoïdal a une longueur comprise entre 1 pas d'hélice et 1,3 pas d'hélice.

3. Dispositif de remplissage selon la revendication 1, dans lequel deux éléments hélicoïdaux successifs (7) présentent des sens de rotation inverse, l'un "gauche", l'autre "droit".

4. Dispositif de remplissage selon la revendication 1, dans lequel lorsque le diamètre de la paroi de l'espace annulaire (4) varie, en raison de portions de tube externe (6) de diamètre interne décroissant de haut en bas, le système d'éléments hélicoïdaux (7) est muni à ses extrémités les plus proches de la paroi de l'espace annulaire (4) de lèvres en caoutchouc qui permettent d'ajuster la largeur du plan incliné de manière à obtenir un contact avec la paroi interne de l'espace annulaire (4).

5. Dispositif de remplissage selon la revendication 1, dans lequel le premier élément hélicoïdal (premier au sens de celui qui est le plus proche du lit de particules) est équipé de poids qui permettent de vaincre le frottement des lèvres en caoutchouc à la paroi du tube externe (6).

6. Méthode de chargement du catalyseur faisant appel au dispositif selon la revendication 1 **caractérisée par** la suite d'étapes suivantes:
- le système de chargement est initialement enroulé dans l'enrouleur externe (10), la trémie (1) étant remplie de solide,
- le système de chargement est ensuite introduit progressivement dans la zone annulaire (4) par sa partie supérieure jusqu'à ce que le premier élément hélicoïdal (7) atteigne une distance par rapport au fond du tube comprise entre 50 cm et 100 cm.
- le tapis roulant (2) est mis en route de manière à fournir un débit de solide compris entre 250 kg/h et 500 kg/h, solide qui est introduit dans la zone annulaire (4) par l'intermédiaire de l'entonnoir (3),
- au fur et à mesure que la zone annulaire (4) se remplit, le système de chargement est remonté de la zone annulaire (4) à l'aide de l'enrouleur externe (10), de manière à respecter une distance constante entre le premier élément hélicoïdal et la surface du lit qui se constitue progressivement, ladite distance étant comprise entre 50 cm et 100 cm.
- le système est enroulé avec une vitesse équivalente à la vitesse de chargement du tube comprise entre 0,2 m / min et 0,4 m/min.
- une fois le tube chargé et le système de chargement enroulé, le système est déplacé pour le chargement du tube suivant.

## Patentansprüche

1. Vorrichtung zum dichten Füllen des Katalysators in einen Dampfreformierungs-Austauschreaktor, bestehend aus einer Vielzahl von Bajonettrohren, die in einen Kalander eingeschlossen sind, wobei der Katalysator von Partikeln gebildet ist, die zumindest teilweise den ringförmigen Raum (4) einnehmen, der zwischen einem Innenrohr (5) und einen Außenrohr (6) vorhanden ist, wobei die Gesamtheit dieser beiden Rohre ein Bajonettrohr bildet, wobei die Breite des ringförmigen Raums zwischen 30 mm und 80 mm und seine Höhe zwischen 10 und 20 Metern beträgt, wobei die Katalysatorpartikel die Form von Zylindern mit einer Höhe von annähernd 10 mm bis 20 mm und einem Durchmesser von annähernd 10 mm bis 20 mm haben, wobei die Vorrichtung besteht aus:
- einer Gesamtheit von kernlosen spiralförmigen Elementen (7), die regelmäßig vertikal entlang des ringförmigen Raums (4) verteilt sind, mit einer Länge zwischen 1 und 1,5 Spiralsteigungen, vorzugsweise zwischen 1 und 1,3 Spiralsteigungen, wobei die Elemente durch einen Vertikalabstand zwischen 50 cm und 150 cm getrennt sind,
- wobei die Spiralelemente (7) untereinander durch eine Kette (8) oder vertikale Drähte verbunden sind, die sich um einen Wickler (10) wickeln, der sich außerhalb des zu füllenden Rohrs befindet, wobei jedes Spiralelement (7) die Form einer nach unten geneigten Ebene um einen Winkel alpha in Bezug zur Vertikalen zwischen 30° und 50° hat, und wobei sein Außendurchmesser in Abhängigkeit vom Innendurchmesser des Außenrohrs (6) variiert, so dass, wenn die Vorrichtung zur Gänze ausgebreitet ist, jedes Spiralelement (7) den gesamten ringförmigen Querschnitt (4) einnimmt, und wobei die Katalysatorpartikel enthalten sind in:
o einem zentralen Trichter (1), der es ermöglicht, die Partikel auf ein Förderband (2) zu leiten, das den ringförmigen Raum (4) versorgt mit Hilfe:
o eines Trichters (3), durch den die Partikel in das Innere des ringförmigen Raums (4) fließen.

2. Füllvorrichtung nach Anspruch 1, bei der jedes spiralförmige Element eine Länge zwischen 1 Spiralsteigung und 1,3 Spiralsteigungen hat.

3. Füllvorrichtung nach Anspruch 1, bei der zwei aufeinanderfolgende spiralförmige Elemente (7) inverse Drehrichtungen aufweisen, eines "links", das andere "rechts".

4. Füllvorrichtung nach Anspruch 1, bei der, wenn der Durchmesser der Wand des ringförmigen Raums (4) auf Grund von Außenrohrabschnitten (6) mit einem von oben nach unten abnehmenden Durchmesser variiert, das System von spiralförmigen Elementen (7) an seinen nächsten Enden zur Wand des ringförmigen Raums (4) mit Kautschuklippen versehen ist, die es ermöglichen, die Breite der geneigten Ebene einzustellen, um einen Kontakt mit der Innenwand des ringförmigen Raums (4) zu erhalten.

5. Füllvorrichtung nach Anspruch 1, bei der das erste spiralförmige Element (erstes in dem Sinne, dass es am nächsten zum Partikelbett ist) mit Gewichten versehen ist, die es ermöglichen, die Reibung der Kautschuklippen an der Wand des Außenrohrs (6) zu überwinden.

6. Methode zum Füllen des Katalysators, die auf die Vorrichtung nach Anspruch 1 zurückgreift, **gekennzeichnet durch** die Abfolge der folgenden Schritte:
- das Füllsystem wird zuerst in den äußeren Wickler (10) gewickelt, wobei der Trichter (1) mit Feststoff gefüllt wird,
- das Füllsystem wird dann nach und nach in die ringförmige Zone (4) mit seinem oberen Teil eingeführt, bis das erste spiralförmige Element (7) einen Abstand zum Boden des Rohrs zwischen 50 cm und 100 cm erreicht,
- das Förderband (2) wird in Gang gesetzt, um eine Feststoffmenge zwischen 250 kg/h und 500 kg/h zu liefern, wobei der Feststoff in die ringförmige Zone (4) mit Hilfe des Trichters (3) eingeleitet wird,
- im Zuge dessen, dass sich die ringförmige Zone (4) füllt, wird das Füllsystem von der ringförmigen Zone (4) mit Hilfe des äußeren Wicklers (10) wieder hochgefahren, um einen konstanten Abstand zwischen dem ersten spiralförmigen Element und der Oberfläche des Bettes, das sich nach und nach bildet, einzuhalten, wobei der Abstand zwischen 50 cm und 100 cm beträgt,
- das System wird mit einer Geschwindigkeit gleich der Füllgeschwindigkeit des Rohrs zwischen 0,2 m/min und 0,4 m/min aufgewickelt,
- wenn das Rohr gefüllt und das Füllsystem aufgewickelt ist, wird das System zum Füllen des folgenden Rohrs verschoben.

## Claims

1. A device for densely filling catalyst specially adapted to a steam reforming exchanger-reactor consisting of a plurality of bayonet tubes enclosed in a shell, the catalyst being constituted by particles occupying at least a portion of the annular space (4) included between an internal tube (5) and an external tube (6), the assembly of said two tubes constituting a bayonet tube, the width of said annular space being in the range 30 mm to 80 mm, and its height being in the range 10 to 20 metres, the particles of catalyst being in the form of cylinders with an approximate height of 10 mm to 20 mm and an approximate diameter of 10 mm to 20 mm, the device consisting of:
- a series of shaftless helical elements (7) distributed vertically along the length of the annular space (4) in a regular manner with a length in the range 1 to 1.5 pitches of the helix, preferably in the range 1 to 1.3 pitches of the helix, said elements being separated by a vertical distance in the range 50 cm to 150 cm;
- said helical elements (7) being connected together via a chain (8) or vertical files which is wound around a spooler (10) located outside the tube to be filled, each helical element (7) being in the form of a plane inclined downwardly at an angle alpha with respect to the vertical in the range 30° to 50°, and its external diameter varying with the internal diameter of th external tube (6) in such a way that the device being entirely deployed each helical element (7) occupies all the annular space (4), and the particles of catalyst being contained in :
o a central feed hopper (1) for delivering the particles onto a conveyor belt (2) supplying the annular space (4) by means of:
o a funnel (3) via which the particles flow into the interior of the annular space (4).

2. The filling device according to claim 1, in which each helical element has a length in the range 1 pitch of the helix to 1.3 pitches of the helix.

3. The filling device according to claim 1, in which two successive helical elements (7) have reversed directions of rotation, one being "left handed" and the other being "right handed".

4. The filling device according to claim 1 in which, when the diameter of the wall of the annular space (4) varies because of the internal diameter of portions of the external tube (6), the system of helical elements (7) is provided, at its ends nearest to the wall of the annular space (4), with lips formed from rubber which can be used to adjust the width of the inclined plane in a manner such as to obtain a contact with the internal wall of the annular space (4).

5. The filling device according to claim 1, in which the first helical element (first in the sense of that which is nearest to the bed of particles) is equipped with weights which can be used to overcome the friction of the rubber lips on the wall of the external tube (6).

6. A method for loading catalyst using the device according to claim 1, **characterized by** the following series of steps:
- the loading system is initially wound into the external spooler (10), the feed hopper (1) being filled with solid;
- the loading system is then gradually introduced into the annular zone (4) via its upper portion until the first helical element (7) reaches a distance with respect to the bottom of the tube in the range 50 cm to 100 cm;
- the conveyor belt (2) is started up so as to provide a flow rate of solid in the range 250 kg/h to 500 kg/h, the solid particles being introduced into the annular zone (4) via the funnel (3);
- as the annular zone (4) is progressively filled, the loading system is raised in the annular zone (4) with the aid of the external spooler (10) in a such manner as to keep a constant distance between the first helical element and the surface of the bed which is gradually being constituted, said distance being in the range 50 cm to 100 cm;
- the system is wound up at a speed equivalent to the speed of loading of the tube, in the range 0.2 m/min to 0.4 m/min;
- once the tube has been loaded and the loading system wound up, the system is displaced in order to load the next tube.
